# EUROPEAN PATENT SPECIFICATION

(11) **EP 0 615 636 B1**
(45) Date of publication and mention of the grant of the patent: **10.01.1996**
(21) Application number: 93900089.9
(22) Date of filing: 30.11.1992
(51) Int. Cl.: G05D 23/12, F16K 31/60

(54) **SETTING DEVICE FOR A RADIATOR VALVE**
Einstellvorrichtung für ein Heizkörperventil
DISPOSITIF DE REGLAGE POUR ROBINET DE RADIATEUR

(30) Priority: 07.12.1991 DE 4140374
(43) Date of publication of application: 21.09.1994
(73) Proprietor: Danfoss A/S, DK-6430 Nordborg (DK)
(72) Inventor: BÖGH, Hansen, Henning, DK-8600 Silkeborg (DK); MAROTI, Stefan, Paul, DK-8600 Silkeborg (DK); FREDERIKSEN, Bjarne, DK-8600 Silkeborg (DK); PINHOLT, Niels, Anton, Vilhelm, DK-8000 Aarhus (DK)
(86) International application number: DK9200356
(87) International publication number: WO9312478

(56) References cited:
- EP-A- 0 044 904
- DE-A- 2 733 770
- FR-A- 2 277 291

## Description

The invention relates to a setting device for a radiator valve having two parts that are rotatable with respect to one another about an axis, namely, a rotary knob and a base part, and a device for limiting the angle of rotation which comprises at least one stop member, which is fixed in the first of the parts in the direction of rotation, and at least one limiter, which is arranged to be fixed in the second of the parts in recesses in different positions in the direction of rotation.

A setting device of that kind is known from DE 30 28 658 A1. Here, the base part has slot-like elongate openings distributed radially on the circumference and extending parallel to the axis, into which limit plates are arranged to be inserted. A stop member is provided inside the rotary knob. The rotary knob can be rotated only until the stop member engages one of the limit plates. Generally speaking, two limit plates are provided, which define the angle of rotation of the rotary knob upwards and downwards. In the assembled state, these limit plates can be changed over or removed from the setting device. Obviously, they are easily lost, since places for spares are provided, in which two spare limit plates can be stored. Furthermore, an additional limiting plate which cannot be removed using normal means is provided, and is fixedly installed on the other side of the normal positions of the limit plates in order to form an upper limit for the angle of rotation through which the rotary knob can turn should the normal limit plates be missing. This is intended to prevent the rotary knob from being unscrewed from the base part. The limit plates have an angled end which projects from the slots. They can be gripped at this end and withdrawn from the slots. By changing the position of the limit plates, the range of the angle of rotation of the rotary knob can be changed.

A setting device having a similar effect is known from DE 21 48 967 B2. In that case, the base part has a ring which surrounds the rotary knob. The ring has a stop rib on its inner circumference. The rotary knob has a row of slots which extend axially starting from the front side. Stops can be introduced axially into these slots. In order to prevent these stops from falling out of the ribs, a cap is provided. Here too, there is a risk that the adjustable stops will be lost. Without stops, however, the rotary knob can be displaced over too wide a range, so that there is a risk of the radiator being set at too high or too low a temperature. In addition, adjustment of the means limiting the angle of rotation is laborious, because the setting means has to be partially dismantled.

The invention is based on the problem of increasing the ease of operation of a setting device.

This problem is solved in the case of a setting device of the kind mentioned in the introduction in that the first part closes the recess receiving the limiter at least sufficiently far for a movement of the limiter out of the setting device to be blocked, at least in a pre-determined range of the angle of rotation, which includes the largest part of the angle of rotation.

The limiters can therefore be removed from the setting device in only one or just a few predetermined positions, or even, in an especially advantageous embodiment, are captively contained within the setting device. When manipulating the rotary knob, the operator no longer has to be careful to avoid touching the limiter accidentally and removing it from the setting device. The limit of the angle of rotation is maintained with good reliability. Fine adjustments are largely avoided.

It is here preferable for the recesses for all possible positions of the limiter to be interconnected by an annular space, the recesses continuing in a radial and/or axial direction out of the annular space and having in the circumferential direction turning-moment engagement surfaces co-operating with the limiter. The annular space enables the limiter to be moved within the setting device from one position to another position without having to remove it from the setting device. For that purpose, depending on the direction in which the recess extends, the limiter must be moved radially and/or axially into the annular space until it comes free of the turning-moment engagement surfaces. In the annular space it can be moved in the circumferential direction until it has reached the desired position. It can then again be moved axially and/or radially, with the result that it is introduced into a different recess. The limiter is, however, even during this adjusting process for limiting the angle of rotation, held captive within the setting device. This setting of the limit of the angle of rotation can, of course, also be effected in that the limiter is removed from the recess, and then the part which has the recesses is rotated correspondingly until the recess of the desired position lies opposite the limiter.

In an especially preferred form of embodiment, the first part has an integral projection projecting into the annular space which blocks a radial and/or axial movement of the limiter out of the recesses. In the region of the integral projection it is not possible to adjust the limit of the angle of rotation. The limiters are held securely in their position by the integral projection.

In order to ensure that it is possible to adjust the limit of the angle of rotation, provision is advantageously made for the integral projection to be interrupted in the circumferential direction only by the stop member and at least in one region immediately adjacent to the stop member, which is about the width of the limiter. In order to change the limit of the angle of rotation, one of the two parts, the rotary knob, for example, is turned so that the limiter comes to rest against the stop member. In this position the integral projection is interrupted so that the movement of the limiter in a radial and/or axial direction is no longer blocked by the integral projection. The limiter can then be moved out of the recess. The part, in this particular case the rotary knob, can then be rotated further unaffected by this limiter. When the rotary knob has been rotated into a position corresponding to a stop position of the limit of the angle of rotation, the limiter can again be displaced into the recess of the rotary knob. For further turning, this position then represents the end of the rotary movement of the rotary knob.

In order to prevent improper adjustment of the limiter in the awareness of this possibility, an insert is provided which is arranged to be fixed in the region. In other words, the integral projection is replaced here by a movable part which can be installed or removed. In its removed state, it is possible to adjust the limit of the angle of rotation. When the insert is fitted in, there is no opportunity for adjustment. The integral projection need not be integral with the first part. It may alternatively be an additional part fixed to the first part.

Preferably, the insert part is arranged to be introduced into the first part from the side facing away from the second part. This is a less accessible point so that deliberate measures that could lead to improper adjustment of the limit of the angle of rotation are largely prevented. The setting device is therefore especially suitable for use on radiators accessible to the public, for example in kindergartens, schools or hospitals.

It is then especially preferable for the insert to be held gripped by the first part. That offers a certain security against the part falling out of the setting device. It is also more difficult to pull it out.

Furthermore, it is an advantage for the recesses to be arranged equidistant from one another in the circumferential direction, at least in one section. Adjustment of the range of the angle of rotation can then be effected in steps, the steps being of equal size. This facilitates the pre-selection of the limits of the angle of rotation.

Using such a construction it is also possible for the limiter to be inserted into more than one recess simultaneously. The limiter can therefore be supported in more than one recess, for example, two recesses. This increases the retaining force, or that is to say provides an increased resistance turning moment, so that the limiter cannot be forced out of its recess or sheared off even at relatively high forces that press on the part to be rotated.

Preferably, the recesses are formed by gaps between teeth in a toothed configuration, the tooth flanks of which extend essentially at right angles to the circumferential direction. In other words, the circumferential direction defines a normal to the tooth flank faces. The teeth therefore have a more or less rectangular or trapezoidal shape in cross-section. When the limiter engages the stop member, the forces that are generated are virtually exclusively forces in the circumferential direction. Forces in an axial or radial direction, which could lead to the rotary knob and the base part being displaced relative to one another, are largely avoided.

Advantageously, the toothed configuration has end teeth, into the movement path of which the stop member projects. In a radial or axial direction the end teeth therefore project further forwards than the remaining teeth. Even when the limiters are not present for some reason or other, for example, because they have been damaged by excessive stress, limits to a maximum angle of rotation are provided by the end teeth. By this means it is possible, for example, to prevent the rotary knob and the base part from being unscrewed from one another. An absolute maximum temperature or an absolute maximum water flow rate can, however, be set by the setting device.

In an especially preferred embodiment, the limiter is in the form of a U-shaped spring member, which bears with one arm on the side of the annular space lying opposite the recesses and with the other arm, or a projection joined thereto, projects into the recess. The U-shaped spring member is here pre-stressed in the opening direction so that the other arm, or the projection joined thereto, is pressed into the recess. The first arm, or the projection joined to it, can be removed from the recess simply by pressing in the other arm. The second part can then be freely rotated relative to the first part.

A safety measure is provided in that, in its fitted position, the U-shaped spring member has between its two arms a space for the integral projection and the insert. The integral projection, and the insert, fill this space virtually completely, so that, when the U-shaped spring member is located over the integral projection and the insert, it is impossible for the U-shaped spring member to be pressed in and for its arms, or the projection, to be removed from the recess.

It is then an advantage for the toothed configuration to run substantially parallel to the axis. The U-shaped spring member then has a relatively large clamping force.

In another preferred embodiment, provision is made for the toothed configuration to be inclined to the axis at a predetermined angle, and for the limiter to have a correspondingly inclined engagement geometry, in which the limiter has a cutout which has bounding faces that are inclined in relation to the engagement geometry. The inclination of the bounding faces in relation to the engagement geometry ensures that the limiter is fixed in the toothed configuration both in the axial and the radial direction. The limiter is therefore unable to slip out of the toothed configuration in the direction of the inclination.

An especially simple structure is provided in that one bounding face runs substantially parallel with the direction of the axis and the other runs substantially at right angles to the direction of the axis. In that case, the integral projection can run substantially parallel with the axis.

Another possibility, which can also be used in combination with the previous one, is preferably embodied by the annular space having parallel side walls at its open end. At the end of the inclined toothed configuration located closer to the opening there is therefore an angle in the bounding wall which also prevents the limiter from moving out of the toothed configuration in the direction of the inclination.

In a preferred embodiment, provision is also made for the limiter to be held in the recess by frictional force or a snap-fit mechanism. The limiter is thereby clamped fixedly in the recess, so that a certain amount of force is required to remove the limiter from the recess. That prevents the limiter from falling out of the recess when the integral projection in the regions adjacent to the stop member is lacking.

In every case, it is an advantage for the limiter to have a lug projecting out beyond the external circumference of the other part. By means of this lug, it can be operated, that is, can be moved out of or into the recesses.

It is also an advantage for two limiters to be provided. By this means it is possible to determine not just one but both limits of the angle of rotation.

The invention is described hereinafter with reference to preferred embodiments.
- Fig. 1: shows a view of a setting device, partially in section,
- Fig. 2: shows a section II-II according to Fig. 1,
- Fig. 3: shows a modified section B-B according to Fig. 2,
- Fig. 4: shows an alternative embodiment to Fig. 1, and
- Fig. 5: shows a section V-V according to Fig. 4.

A setting device 1 has a rotary knob 2 which is rotatable about an axis 4 in relation to a base part 3. The base part 3 can be fixed to a radiator valve, not illustrated in detail.

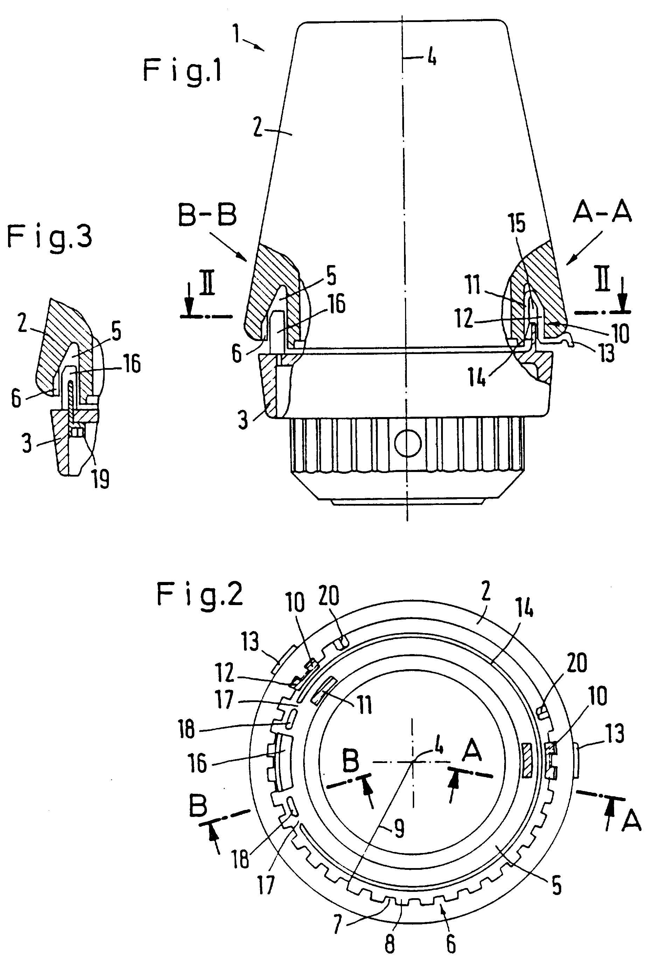

The end face of the rotary knob 2 facing towards the base part 3 has a circumferential annular space 5. The annular space has a toothed configuration 6 which is formed from teeth 7 and gaps 8 between the teeth. The teeth have an approximately rectangular or trapezoidal shape in cross-section, and the flanks of the teeth 7 lying at right angles to the circumferential direction can lie on radial lines 9 that start from the axis 4. In the embodiment according to Figs 1 to 3, the toothed configuration is arranged substantially parallel to the axis 4, that is to say, it surrounds the axis 4 in the manner of a cylinder. The cross-section of the annular space 5 tapers to a tip at its upper end, that is to say, at the end furthest away from the facing end of the rotary knob 2.

In the annular space there are arranged two limiters which are of identical construction. Each limiter is in the form of a U-shaped spring member 10, in which one arm 11 bears against the wall of the annular space 5 opposing the toothed configuration 6, while the other arm 12, or a projection that may be arranged on it, projects into a gap 8 between the teeth. The U-shaped spring member 10 is pre-stressed so that in the non-stressed state the U opens. As a result, the other arm 12 is pressed by spring force into the gap 8 between the teeth which forms the recess for receiving the limiter. The gaps between the teeth are equally spaced from one another. The U-shaped spring member 10 has two arms 12 arranged side by side which engage in adjacent gaps 8 between the teeth. The limiter 10 is therefore able to bear against two tooth flanks. The U-shaped spring member has a lug 13 which projects outwards slightly beyond the circumference of the rotary knob. Through pressure on this lug 13, the other arm 12 of the U-shaped spring member 10 can be moved out of the gap 8 between the teeth.

This movement is normally prevented by an integral projection 14 of the base part 3, which projects into the space 15 between the two arms 11, 12 of the U-shaped spring member 10. This integral projection 14, which is here in the form of a wall, in this manner blocks a movement cf the other arm 12, since this arm 12 is unable to move far enough out of the gap 8 between the teeth to leave the position determined by the gap 8 between the teeth.

The base part 3 also has a stop member 16. Immediately adjacent to the stop member 16 there are two regions 17 which are approximately the same width as the U-shaped spring member 10. They may be a little wider, but may not be narrower. In these regions 17 there is no integral projection 14. When the U-shaped spring member 10 is located in these regions, by actuating the lug 13 the other arm 12 of the U-shaped spring member 10 is able to be displaced sufficiently for the other arm 12 to move out of the gap 8 between the teeth.

In the regions 17 there are slots 18 into which a respective insert 19 can be introduced from the side of the base part 3 opposite the rotary knob 3. These inserts 19 are held fast in the slots 18. As soon as the inserts 19 have been introduced into the base part 3, it is not possible to release the U-shaped spring member 10 in any position.

The toothed configuration 6 has end teeth 20 which are larger than the normal teeth 7. The stop member 16 projects into the path of movement of the end teeth 20. If for any reason the U-shaped spring member 10 should not be inserted or be so badly damaged that it is no longer able to fulfil its function, the end teeth 20 continue to provide a limit of the angle of rotation of the rotary knob 2 relative to the base part 3, even though this limit is not adjustable and only defines the maximum angle of rotation of the rotary knob.

In order to adjust the limit of the angle of rotation, first of all the inserts 19 are removed from the base part 3. The rotary knob is then turned until the relevant limiter engages the stop member 16 which defines the angle of rotation limit to be set. The lug 13 of the U-shaped spring member 10 is then pressed in, with the result that the other arm 12 of the U-shaped spring member moves out of the gap 8 between the teeth. The rotary knob 2 can now be rotated unaffected by this limiter. When the knob 2 now assumes a position in which the desired limit of the angle of rotation lies on the stop member 16, the lug 13 of the U-shaped spring member 10 is released and the other arm 12, or the other arms 12, snap into the gaps now located at this position. The same procedure can be repeated for the other limiter. Once the two limits of the angle of rotation have been fixed, the inserts 19 can be introduced into the slots 18 again. Unauthorised alteration of the range of the angle of rotation is now impossible.

Care should be taken that even in the rotated position, in which the limiter is located beyond the region 17, the annular space 5 is masked by the base part 3 sufficiently for a movement of the limiter out of the recess, that is to say, out of the annular space, to be impossible. The limiters must therefore be introduced into the rotary knob before the rotary knob is joined to the base part.

The integral projection 14 need not be in the form of a smooth wall. It may also be toothed provided that the two arms 12 of the U-shaped spring member 10 can be guaranteed never simultaneously to come free of the gaps 8 between the teeth.

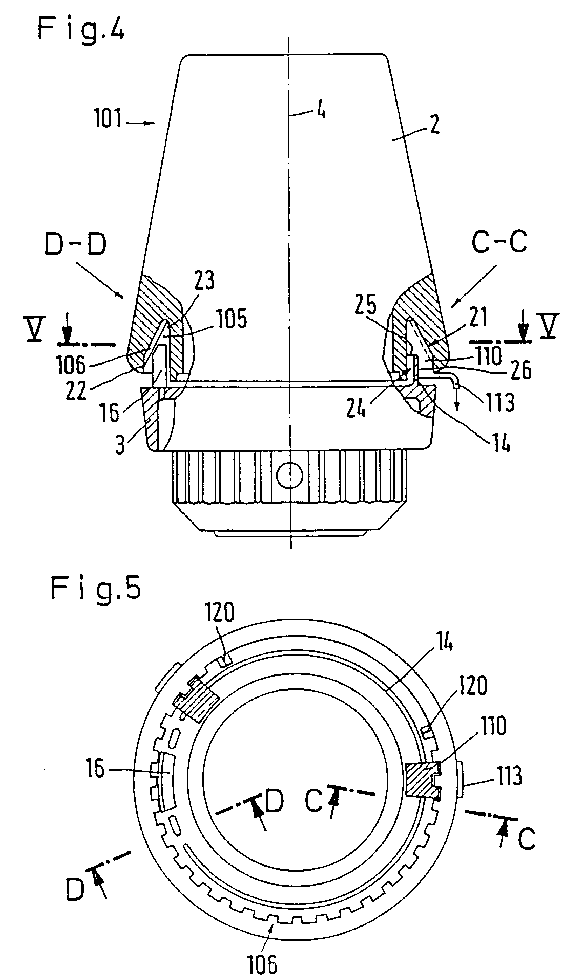

Figs 4 and 5 show a further embodiment, which corresponds substantially to the embodiment of Figs 1 to 3. Identical parts are therefore provided with identical reference numbers, and corresponding parts with reference numbers increased by 100. Unlike the embodiment described previously, the toothed configuration 106 is now no longer arranged on the end of the annular space 105 facing towards the base part 3, but on a portion of a conical surface. The toothed configuration 106 is therefore inclined at a certain angle to the axis 4. The limiter 110 has a correspondingly inclined engagement geometry. The end of the annular space 105 facing towards the base part 3 has two substantially parallel walls, so that the toothed configuration 106 is bounded at both ends by angled walls 22, 23. The orientation of the limiter 110 is therefore fixed in certain respects. It is not possible for it to slip downwards or upwards out of the toothed configuration 106. The limiter 110 has a cutout 24 which has two bounding faces 25, 26, of which one runs substantially parallel to the direction of the axis 4 and the other runs substantially at right angles to the direction of the axis 4. For the rest, the construction corresponds to that of the embodiment according to Figs 1 to 3. In order to release the limiter from its position, once the insert 19 has been removed the rotary knob needs to be turned sufficiently far for the limiter 110 to engage the stop member 16. In this position the limiter 110 is no longer supported by the integral projection 14, so that by means of the lug 113 it can be moved out of engagement with the toothed configuration 106. The rotary knob 2 can then be turned without being affected by this limiter 110. Once the desired position has been reached, the limiter 110 is again brought into engagement with the toothed configuration 106. Provided that the limiter 110 is located above the integral projection 14, or as soon as the insert 19 is introduced, it is no longer possible to change the position of the limiter 110 in the rotary knob.

If a change in the limit of the angle of rotation is to be absolutely prohibited, the insert 19 can even be stamped into the slots 18. Normally, however, it is sufficient for it to wedge so firmly in the slots 18 that it cannot fall out of its own accord. If desired, it can be necessary to have a special tool, for example, an extraction spike, to remove it.

The illustrated embodiments can be modified in many ways. The limiters can also be arranged in the base part 3 and the stop member can be arranged in the rotary knob 2. A combination of the U-shaped spring member with the inclined toothed configuration is also feasible. Even without a U-shaped spring member, the limiter can be kept in engagement with the toothed configuration 106 by the integral projection 14.

## Claims

1. A setting device (1) for a radiator valve having two parts that are rotatable with respect to one another about an axis, namely, a base part (3) and a rotary knob (2), and a device for limiting the angle of rotation which comprises at least one stop member (16), which is fixed in the first of the parts (3) in the direction of rotation, and at least one limiter (10), which is arranged to be fixed in the second of the parts (2) in recesses (8) in different positions in the direction of rotation, characterized in that the first part (3) closes each of the recesses (8, 108) receiving the limiter (10, 110) at least sufficiently far for a movement of the limiter (10, 110) out of the setting device (1) to be blocked, at least in a pre-determined range of the angle of rotation, which includes the largest part of the angle of rotation.

2. A setting device according to claim 1, characterized in that the recesses (8, 108) for all possible positions of the limiter (10, 110) are interconnected by an annular space (5, 105), the recesses (8, 108) continuing in a radial and/or axial direction out of the annular space (5, 105) and having in the circumferential direction turning-moment engagement surfaces co-operating with the limiter.

3. A setting device according to claim 2, characterized in that the first part (3) has an integral projection (14) projecting into the annular space (5, 105) which blocks a radial and/or axial movement of the limiter (10, 110) out of the recesses (8, 108).

4. A setting device according to claim 3, characterized in that the integral projection (14) is interrupted in the circumferential direction only by the stop member (16) and in at least one region (17) immediately adjacent to the stop member, which region is about the width of the limiter (10, 110).

5. A setting device according to claim 4, characterized in that an insert (19) is provided, which is arranged to be fixed in the region (17).

6. A setting device according to claim 5, characterized in that the insert (19) is arranged to be introduced into the first part (3) from the side facing away from the second part (2).

7. A setting device according to claim 5 or 6, characterized in that the insert (19) is held gripped by the first part (3).

8. A setting device according to one of claims 2 to 7, characterized in that the recesses (8, 108) are arranged equidistant from one another in the circumferential direction, at least in one section.

9. A setting device according to claim 8, characterized in that the limiter (10, 110) is inserted into more than one recess simultaneously.

10. A setting device according to one of claims 2 to 9, characterized in that the recesses (8, 108) are formed by gaps between teeth in a toothed configuration (6, 106), the tooth flanks of which extend essentially at right angles to the circumferential direction.

11. A setting device according to claim 10, characterized in that the toothed configuration (6, 106) has end teeth (20, 120) into the path of movement of which the stop member (16) projects.

12. A setting device according to one of claims 2 to 11, characterized in that the limiter (10) is in the form of a U-shaped spring member which bears with one arm (11) on the side of the annular space (5) lying opposite the recesses (8) and with the other arm (12), or a projection joined thereto, projects into the recess (8).

13. A setting device according to claim 12, characterized in that, in its fitted state, the U-shaped spring member has space between its two arms (11, 12) for the integral projection (14) and the insert (19).

14. A setting device according to one of claims 10 to 13, characterized in that the toothed configuration (6) runs substantially parallel to the axis (4).

15. A setting device according to claim 10 or 11, characterized in that the toothed configuration (106) is inclined to the axis (4) at a predetermined angle, and the limiter (110) has a correspondingly inclined engagement geometry (21), in which the limiter (110) has a cutout (24) which has bounding faces (25, 26) that are inclined in relation to the engagement geometry.

16. A setting device according to claim 15, characterized in that one bounding face (26) runs substantially parallel with the direction of the axis (4) and the other (25) runs substantially at right angles to the direction of the axis.

17. A setting device according to claim 15 or 16, characterized in that the annular space (5, 105) has parallel side walls (22, 23) at its open end.

18. A setting device according to one of claims 15 to 17, characterized in that the limiter (110) is held in the recess by frictional force or a snap-fit mechanism.

19. A setting device according to one of claims 1 to 18, characterized in that the limiter (10, 110) has a lug (13, 113) projecting out beyond the external circumference of the second part (2).

20. A setting device according to one of claims 1 to 19, characterized in that two limiters (10, 11) are provided.

## Patentansprüche

1. Einstellvorrichtung (1) für ein Heizkörperventil mit zwei gegeneinander um eine Achse verdrehbaren Teilen, nämlich einem Basisteil (3) und einem Drehgriff (2), und einer Drehwinkelbegrenzungseinrichtung, die mindestens einen Anschlag (16), der in dem ersten der Teile (3) in Drehrichtung festgelegt ist, und mindestens einen Begrenzer (10), der in dem zweiten der Teile (2) in Ausnehmungen (8) in Drehrichtung in verschiedenen Positionen festlegbar ist, aufweist, dadurch gekennzeichnet, daß der erste Teil (3) jede der den Begrenzer (10, 110) aufnehmenden Ausnehmungen (8, 108) zumindest so weit verschließt, daß eine Bewegung des Begrenzers (10, 110) aus der Einstellvorrichtung (1) heraus zumindest in einem vorbestimmbaren Bereich des Drehwinkels, der den größten Teil des Drehwinkels umfaßt, blockiert ist.

2. Vorrichtung nach Anspruch 1, dadurch gekennzeichnet, daß die Ausnehmungen (8, 108) für alle möglichen Positionen des Begrenzers (10, 110) durch einen Ringraum (5, 105) miteinander verbunden sind, wobei sich die Ausnehmungen (8, 108) in radialer und/oder axialer Richtung aus dem Ringraum (5, 105) fortsetzen und in Umfangsrichtung Drehmomentangriffsflächen aufweisen, die mit dem Begrenzer zusammenwirken.

3. Vorrichtung nach Anspruch 2, dadurch gekennzeichnet, daß das erste Teil (3) eine in den Ringraum (5, 105) ragende Ausformung (14) aufweist, die eine radiale und/oder axiale Bewegung des Begrenzers (10, 110) aus den Ausnehmungen (8, 108) heraus blockiert.

4. Vorrichtung nach Anspruch 3, dadurch gekennzeichnet, daß die Ausformung (14) in Umfangsrichtung nur durch den Anschlag (16) und mindestens einem dem Anschlag unmittelbar benachbarten Bereich (17), der etwa die Breite des Begrenzers (10, 110) aufweist, unterbrochen ist.

5. Vorrichtung nach Anspruch 4, dadurch gekennzeichnet, daß ein Einsatzteil (19) vorgesehen ist, das in dem Bereich (17) befestigbar ist.

6. Vorrichtung nach Anspruch 5, dadurch gekennzeichnet, daß das Einsatzteil (19) von der dem zweiten Teil (2) abgewandten Seite her in das erste Teil (3) einführbar ist.

7. Vorrichtung nach Anspruch 5 oder 6, dadurch gekennzeichnet, daß das Einsatzteil (19) vom ersten Teil (3) klemmend gehalten ist.

8. Vorrichtung nach einem der Ansprüche 2 bis 7, dadurch gekennzeichnet, daß die Ausnehmungen (8, 108) in Umfangsrichtung zumindest in einem Teilbereich äquidistant angeordnet sind.

9. Vorrichtung nach Anspruch 8, dadurch gekennzeichnet, daß der Begrenzer (10, 110) in mehr als einer Ausnehmung gleichzeitig eingesetzt ist.

10. Vorrichtung nach einem der Ansprüche 2 bis 9, dadurch gekennzeichnet, daß die Ausnehmungen (8, 108) durch Zahnlücken einer Zahnstruktur (6, 106) gebildet, deren Zahnflanken im wesentlichen senkrecht zur Umfangsrichtung verlaufen.

11. Vorrichtung nach Anspruch 10, dadurch gekennzeichnet, daß die Zahnstruktur (6, 106) Endzähne (20, 120) aufweist, in deren Bewegungsbahn der Anschlag (16) ragt.

12. Vorrichtung nach einem der Ansprüche 2 bis 11, dadurch gekennzeichnet, daß der Begrenzer (10) als Federbügel ausgeführt, der sich mit einem Schenkel (11) an der den Ausnehmungen (8) gegenüberliegenden Seite des Ringraums (5) abstützt und mit dem anderen Schenkel (12) oder einem damit verbunden Vorsprung in die Ausnehmung (8) ragt.

13. Vorrichtung nach Anspruch 12, dadurch gekennzeichnet, daß der Federbügel zwischen seinen beiden Schenkeln (11, 12) im eingebauten Zustand Platz für die Ausformung (14) bzw. das Einsatzteil (19) aufweist.

14. Vorrichtung nach einem der Ansprüche 10 bis 13, dadurch gekennzeichnet, daß die Zahnstruktur (6) im wesentlichen parallel zur Achse (4) verläuft.

15. Vorrichtung nach Anspruch 10 oder 11, dadurch gekennzeichnet, daß die Zahnstruktur (106) gegenüber der Achse (4) um einen vorbestimmten Winkel geneigt ist und der Begrenzer (110) eine entsprechend geneigte Eingriffsgeometrie (21) aufweist, wobei der Begrenzer (110) einen Ausschnitt (24) aufweist, der in bezug zur Eingriffsgeometrie geneigte Begrenzungsflächen (25, 26) aufweist.

16. Vorrichtung nach Anspruch 15, dadurch gekennzeichnet, daß eine Begrenzungsfläche (26) im wesentlichen parallel und die andere (25) im wesentlichen senkrecht zur Richtung der Achse (4) verläuft.

17. Vorrichtung nach Anspruch 15 oder 16, dadurch gekennzeichnet, daß der Ringraum (5, 105) an seinem offenen Ende parallele Seitenwände (22, 23) aufweist.

18. Vorrichtung nach einem der Ansprüche 15 bis 17, dadurch gekennzeichnet, daß der Begrenzer (110) durch Reibkraft oder eine Schnappeinrichtung in der Ausnehmung gehalten ist.

19. Vorrichtung nach einem der Ansprüche 1 bis 18, dadurch gekennzeichnet, daß der Begrenzer (10, 110) eine über den Außenumfang des zweiten Teils (2) hinausragende Fahne (13, 113) aufweist.

20. Vorrichtung nach einem der Ansprüche 1 bis 19, dadurch gekennzeichnet, daß zwei Begrenzer (10, 110) vorgesehen sind.

## Revendications

1. Dispositif de réglage (1) pour un robinet de radiateur comprenant deux parties qui peuvent tourner l'une par rapport à l'autre autour d'un axe, à savoir une partie de base (3) et un bouton rotatif (2), et un dispositif pour limiter l'angle de rotation qui comprend au moins un élément d'arrêt (16) qui est fixé dans la première des parties (3) dans la direction de la rotation, et au moins un organe de délimitation (10) qui est agencé de façon à être fixé dans la seconde des parties (2) dans des évidements (8) dans des positions différentes dans la direction de la rotation, caractérisé en ce que la première partie (3) ferme chacun des évidements (8, 108) recevant l'organe de délimitation (10, 110) au moinssuffisamment loin pour qu'un mouvement de l'organe de délimitation (10, 110) hors du dispositif de réglage (1) soit bloqué, au moins dans une plage prédéterminée de l'angle de rotation, qui comprend la plus grande partie de l'angle de rotation.

2. Dispositif de réglage selon la revendication 1, caractérisé en ce que les évidements (8, 108) pour toutes les positions possibles de l'organe de délimitation (10, 110) sont interconnectés par un espace annulaire (5, 105), les évidements (8, 108) se continuant dans une direction radiale et/ou axiale hors de l'espace annulaire (5, 105) et comprenant des surfaces d'engagement à couple de rotation dans la direction circonférentielle et coopérant avec l'organe de délimitation.

3. Dispositif de réglage selon la revendication 2, caractérisé en ce que la première partie (3) comprend une saillie d'un seul tenant (14) faisant saillie dans l'espace annulaire (5, 105) qui bloque un mouvement radial et/ou axial de l'organe de délimitation (10, 110) hors des évidements (8, 108).

4. Dispositif de réglage selon la revendication 3, caractérisé en ce que la saillie d'un seul tenant (14) est interrompue dans la direction circonférentielle seulement par l'élément d'arrêt (16) et dans au moins une région (17) immédiatement adjacente à l'élément d'arrêt, laquelle région présente environ la largeur de l'organe de délimitation (10, 110).

5. Dispositif de réglage selon la revendication 4, caractérisé en ce qu'il est prévu un insert (19) qui est aménagé pour être fixé dans la région (17).

6. Dispositif de réglage selon la revendication 5, caractérisé en ce que l'insert (19) est aménagé de manière à être introduit dans la première partie (3) à partir du côté qui est tourné à l'opposé de la seconde partie (2).

7. Dispositif de réglage selon la revendication 5 ou 6, caractérisé en ce que l'insert (19) est maintenu en étant serré par la première partie (3).

8. Dispositif de réglage selon l'une des revendications 2 à 7, caractérisé en ce que les évidements (8, 108) sont disposés de façon équidistante les uns des autres dans la direction circonférentielle, au moins dans une section.

9. Dispositif de réglage selon la revendication 8, caractérisé en ce que l'organe de délimitation (10, 110) est inséré simultanément dans plus d'un unique évidement.

10. Dispositif de réglage selon l'une des revendications 2 à 9, caractérisé en ce que les évidements (8, 108) sont formés par des interstices entre des dents d'une configuration dentée (6, 106), dont les flancs des dents s'étendent essentiellement à angle droit par rapport à la direction circonférentielle.

11. Dispositif de réglage selon la revendication 10, caractérisé en ce que la configuration dentée (6, 106) comprend des dents d'extrémité (20, 120) dans le parcours de mouvement desquelles fait saillie l'élément d'arrêt (16).

12. Dispositif de réglage selon l'une des revendications 2 à 11, caractérisé en ce que l'organe de délimitation (10) se présente sous la forme d'un élément à ressort en forme de U qui s'applique par un bras (11) contre le côté de l'espace annulaire (5) situé face aux évidements (8) et fait saillie par l'autre bras (12), ou par une saillie qui lui est reliée, dans l'évidement (8).

13. Dispositif de réglage selon la revendication 12, caractérisé en ce qu'à l'état fixé, l'élément à ressort en forme de U comprend un espace entre ses deux bras (11, 12) pour la saillie d'un seul tenant (14) et pour l'insert (19).

14. Dispositif de réglage selon l'une des revendications 10 à 13, caractérisé en ce que la configuration dentée (6) est sensiblement parallèle à l'axe (4).

15. Dispositif de réglage selon la revendication 10 ou 11, caractérisé en ce que la configuration dentée (106) est inclinée par rapport à l'axe (4) selon un angle prédéterminé, et l'organe de délimitation (110) présente une géométrie d'engagement (21) d'inclinaison correspondante, l'organe de délimitation (10) comprenant une découpe (24) qui comporte des faces limites (25, 26) qui sont inclinées par rapport à la géométrie d'engagement.

16. Dispositif de réglage selon la revendication 15, caractérisé en ce qu'une face limite (26) est sensiblement parallèle à la direction de l'axe (4) et l'autre (25) est sensiblement à angle droit par rapport à la direction de l'axe.

17. Dispositif de réglage selon la revendication 15 ou 16, caractérisé en ce que l'espace annulaire (5, 105) comprend des parois latérales parallèles (22, 23) à son extrémité ouverte.

18. Dispositif de réglage selon l'une des revendications 15 à 17, caractérisé en ce que l'organe de délimitation (110) est maintenu dans l'évidement par une force de friction ou par un mécanisme d'enclenchement.

19. Dispositif de réglage selon l'une des revendications 1 à 18, caractérisé en ce que l'organe de délimitation (10, 110) comprend une patte (13, 113) faisant saillie au-delà de la circonférence externe de la seconde partie (2).

20. Dispositif de réglage selon l'une des revendications 1 à 19, caractérisé en ce que sont prévus deux organes de délimitation (10, 11).
